# FASCICULE DE BREVET EUROPEEN

(11) **EP 0 761 358 B1**
(45) Date de publication et mention de la délivrance du brevet: **12.04.2000**
(21) Numéro de dépôt: 96410094.5
(22) Date de dépôt: 05.09.1996
(51) Int. Cl.: B23G 3/00

(54) **Outil de taraudage sur presse**
Gewindebohrwerkzeug verwendet in einer Presse
Tapping tool used on a press

(30) Priorité: 11.09.1995 FR 9510741; 13.10.1995 FR 9512200
(43) Date de publication de la demande: 12.03.1997
(73) Titulaire: Lavorel, Gérard, 74370 Metz-Tessy (FR)
(72) Inventeur: Lavorel, Gérard, 74370 Metz-Tessy (FR)
(74) Mandataire: Gasquet, Denis

(56) Documents cités:
- FR-A- 2 688 435
- US-A- 2 346 297
- US-A- 2 715 233
- US-A- 3 162 873

## Description

La présente invention concerne un dispositif de taraudage sur presse selon le préambule de la revendication 1, notamment pour une presse à découper ou à emboutir.

Le document EP-A-0 192 586 décrit un tel dispositif comportant, montés dans un bâti :
- un mécanisme de transformation de mouvement comprenant, d'une part, un organe d'entrée qui est mobile en translation dans une direction X relativement au bâti et qui est actionnable par la presse, et d'autre part, un organe de sortie qui est mobile en rotation autour d'un axe parallèle à la direction X relativement au bâti et qui est entraîné par l'organe d'entrée,
- un mécanisme de transmission mû par l'organe de sortie du mécanisme de transformation de mouvement,
- et un ensemble porte-taraud comprenant une broche porte-taraud qui présente un axe longitudinal parallèle à la direction X et qui est entraîné en rotation autour de son axe longitudinal, cette broche étant montée dans une vis-patronne creuse qui est elle-même vissée dans un écrou présentant un axe central parallèle à la direction X et entraîné en rotation autour de cet axe central par le mécanisme de transmission, les vitesses de rotation de l'écrou et de la broche porte-taraud étant telles que la vis-patronne se déplace axialement d'un pas du taraud relativement au bâti pendant que la broche-taraud fait un tour sur elle-même.

Ce dispositif connu présente les inconvénients d'être complexe donc coûteux, fragile, et ne permet que de faire des opérations de taraudage relativement lentes.

La présente invention a notamment pour but de pallier ces inconvénients en proposant un nouveau dispositif de taraudage sur presse particulièrement simple et donc peu coûteux, fiable et robuste, qui permet de réaliser des taraudages à grande vitesse.

Ainsi, le dispositif de taraudage sur presse selon l'invention est du type comprenant un bâti, un mécanisme de transformation de mouvement, relié cinématiquement à un ensemble porte-taraud par un mécanisme de transmission constitué par un train d'engrenage, ledit mécanisme de transformation de mouvement étant constitué par une vis, mobile en translation par rapport audit bâti, qui coopère avec un écrou mobile en rotation et solidaire d'un pignon de commande, ce dernier entraînant ledit mécanisme de transmission, il est caractérisé en ce que ce dernier comprend un pignon d'entrée coopérant avec le pignon de commande et deux pignons de sortie entraînant l'ensemble porte-taraud.

Selon une caractéristique complémentaire, l'ensemble porte-taraud est constitué par une vis-patronne vissée dans un écrou rotatif présentant une denture extérieure constituant un premier pignon d'entraînement, coopérant avec le premier pignon de sortie, ladite vis-patronne comprenant, par ailleurs, à son extrémité supérieure une denture constituant un deuxième pignon d'entraînement en prise avec le deuxième pignon de sortie.

Selon une disposition avantageuse, la vis-patronne comprend un canal central cylindrique destiné à recevoir une broche porte-taraud dans laquelle est monté un taraud, ladite broche porte-taraud étant sollicitée vers le bas contre une butée par un ressort logé dans ledit canal central, tandis que les deux pignons de sortie du mécanisme de transmission sont montés sur un même axe et sont solidaires, ces deux pignons de sortie présentant des diamètres différents.

Selon une autre caractéristique complémentaire, le pignon de sortie qui est en prise avec la denture extérieure de la vis-patronne présente un diamètre supérieur au pignon de sortie qui est en prise avec la denture extérieure de l'écrou de l'ensemble porte-taraud.

L'invention sera bien comprise à la lecture de la description suivante d'une de ses formes de réalisation, donnée à titre d'exemple non limitatif, en regard des dessins annexés.

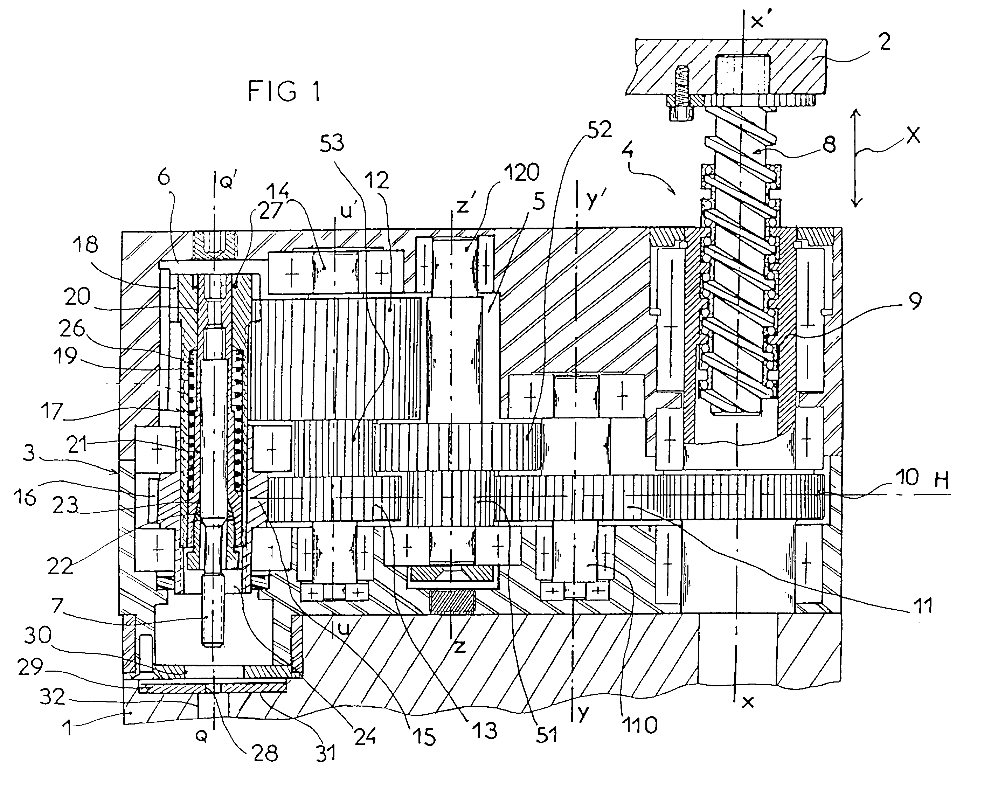

La figure 1 est une vue en coupe verticale longitudinale d'un dispositif de taraudage selon une forme de réalisation de l'invention.

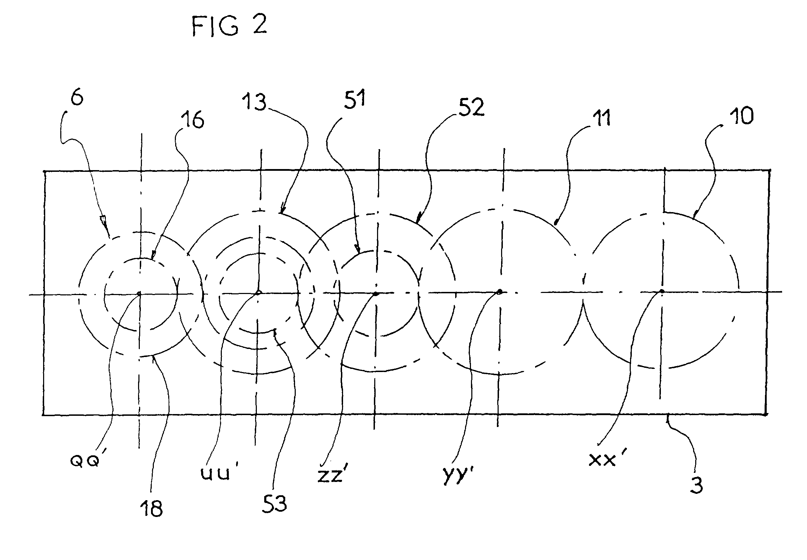

La figure 2 est une vue de dessus schématique.

La figure 3 est une vue partielle en coupe illustrant une variante de réalisation selon laquelle la vis-patronne est du type à billes.

la figure 4 est une vue similaire à la figure 2 montrant une variante d'exécution.

Le dispositif de taraudage représenté sur le dessin est monté dans une presse à découper ou à emboutir, dotée d'un plateau inférieur (1) fixe et d'un plateau supérieur (2) mobile en translation selon une direction verticale (X).

Ce dispositif de taraudage comporte :
- un bâti ou carter (3), supporté par le plateau inférieur (2) de la presse,
- un ensemble vis-écrou (4) constituant un mécanisme de transformation de mouvement,
- un mécanisme de transmission (5) relié cinématiquement à un ensemble porte-taraud (6),
- et un taraud (7).

L'ensemble vis-écrou à pas rapide (4) constitue un mécanisme de transformation de mouvement et comporte une vis (8) d'axe vertical, qui est fixée au plateau supérieur (2) de la presse. La vis (8) est engagée dans un écrou (9), lui-même d'axe vertical, qui est monté rotatif dans le carter (3) autour de son axe et qui présente un denture extérieure constituant un pignon de commande (10). On pourrait, bien entendu, utiliser tout autre mécanisme de transformation de mouvement comme, par exemple, un mécanisme du type à crémaillère ou autre.

Ce pignon de commande (10) entraîne le mécanisme de transmission (5) qui est constitué par un train d'engrenages comportant un pignon d'entrée (11) en prise avec la denture de commande de pignon (10), et deux pignons de sortie (12, 13) qui entraînent l'ensemble porte-taraud (6), à savoir, un premier pignon de sortie (13) et un deuxième pignon de sortie (12).

Tous les pignons (11-51-52, 53-12-13) constituant le mécanisme de transmission (5) sont rotatifs autour d'axes verticaux (110, 120, 14) et de préférence, les deux pignons de sortie (12, 13) de ce mécanisme sont solidaires et sont rotatifs autour du même axe (14). Ainsi, le mécanisme de transmission (5) comprend, en plus du pignon d'entrée (11) et des deux pignons de sortie (12, 13), trois autres pignons intermédiaires, à savoir, un premier pignon intermédiaire (51) associé en rotation à un deuxième pignon intermédiaire (52), ce dernier étant en prise avec un troisième pignon intermédiaire (53). Notons que le pignon d'entrée (11) est solidaire d'un premier axe vertical (110), tandis que le premier pignon intermédiaire (51) et le deuxième pignon intermédiaire (52) sont montés sur un deuxième axe vertical (120), alors que le troisième pignon intermédiaire est monté sur le même axe (14) que celui des pignons de sortie (12, 13). On remarquera que les trois axes (110, 120, 14) sont verticaux et parallèles entre eux. Ajoutons que le premier pignon de sortie (13) est disposé avantageusement dans le même plan horizontal (H) que le pignon de commande (10), le pignon d'entrée (11) et le premier pignon intermédiaire.

L'ensemble porte-taraud (6) quant à lui, comporte tout d'abord un écrou (15) d'axe vertical, qui est monté rotatif dans le carter autour de son axe et qui présente une denture extérieure constituant un premier pignon d'entraînement (16) en prise avec le premier pignon de sortie (13) du mécanisme de transmission (5).

Dans l'écrou (15) est vissée une vis-patronne (17) creuse, qui s'étend verticalement jusqu'à une extrémité supérieure dotée d'une denture constituant un deuxième pignon d'entraînement (18) en prise avec le deuxième pignon de sortie (12) du mécanisme de transmission (5).

La vis-patronne (17) délimite intérieurement un canal vertical (19) qui s'étend sur toute la hauteur de ladite vis (17) et qui présente dans sa partie supérieure un étranglement (20) de section carrée ou autre. Au-dessous de cet étranglement (20), le canal central (19) est cylindrique de révolution.

Le canal (19) reçoit une broche porte-taraud (21) creuse dans laquelle est monté le taraud (7) de façon classique, par exemple, au moyen d'un mors de serrage (22) qui est repoussé dans un logement tronconique (23) par une bague de serrage (24).

La broche porte-taraud (21) comporte une partie inférieure qui est logée sans jeu dans la partie inférieure cylindrique de révolution du canal (19). Cette partie inférieure de la broche (21) délimite vers le haut un épaulement, et elle se prolonge vers le haut par une partie rétrécie de section circulaire, elle-même prolongée vers le haut par une partie encore rétrécie de section carrée ou autre identique à la section de l'étranglement (20).

La partie de section carrée de la broche porte-taraud (21) débute à une certaine distance au-dessous de l'étranglement (20) et s'étend vers le haut jusqu'à l'extrémité supérieure de la vis-patronne (17).

De plus, un ressort hélicoïdal (26) est logé dans le canal (19) autour de la broche (21) entre l'étranglement (20) du canal et l'épaulement de la broche. Ce ressort (26) sollicite la broche (21) vers le bas, le déplacement de ladite broche vers le bas étant toutefois limité, par exemple, au moyen d'une butée telle qu'un circlip (27) qui est fixé en partie supérieure de la broche (21) et qui bute contre un épaulement formé par la partie supérieure de l'étranglement (20).

Lorsqu'on veut tarauder un orifice (28) d'une plaque de tôle (29) au moyen du dispositif qui vient d'être décrit, on présente la plaque (29) sous une ouverture (30) du carter (3) qui est disposée en regard du taraud (7). La plaque (29) repose alors dans une rainure (31) du plateau inférieur (1) de la presse, l'orifice (28) étant en face du taraud (7) et un évidement (32) étant ménagé dans le plateau (1) sous l'orifice (28).

A partir de cette position, la presse est actionnée, de sorte que le plateau supérieur (2) et la vis (8) soient déplacés vers le bas.

Ainsi, l'écrou (9) est entraîné en rotation en entraînant à son tour l'écrou (15) et la vis-patronne (17) par l'intermédiaire du mécanisme de transmission (5).

Du fait que le deuxième pignon de sortie (12) présente un diamètre supérieur au premier pignon de sortie (13) et que la denture (16) présente un diamètre supérieur à la denture (18), la vis-patronne (17) est entraînée en rotation avec une vitesse angulaire supérieure à la vitesse angulaire de l'écrou (15), la vis-patronne et l'écrou tournant tous les deux dans le sens conventionnel du vissage.

Il en résulte un déplacement vers le bas de la vis-patronne (17) par vissage dans l'écrou (15), la denture extérieure (18) de la vis-patronne restant en prise avec le pignon (12) et n'interférant pas avec d'autres éléments au cours de ce mouvement.

Par conséquent, le taraud (7) subit à la fois un déplacement axial vers le bas et une rotation à des vitesses de déplacement axiale et angulaire telles que le taraud se déplace axialement d'un pas lorsqu'il fait un tour sur lui-même, de sorte que l'orifice (28) de la plaque de tôle est taraudé.

Ensuite, le plateau supérieur (2) de la presse est relevé, de sorte que la vis (8) fait tourner l'écrou (9), le mécanisme de transmission (5), l'écrou (15) et la vis-patronne (17) en sens inverse par rapport au mouvement précédent.

Le taraud (7) se déplace donc vers le haut en suivant un mouvement exactement inverse à son mouvement de descente, et il se dégage ainsi de l'orifice (28).

On notera que si un incident se produit au cours du fonctionnement qui vient d'être décrit, par exemple, au cas où la plaque de tôle (29) ne comportait pas d'orifice (28), alors que la broche porte-taraud (21) peut coulisser vers le haut dans le canal (19), contre la sollicitation du ressort (26) : on évite ainsi un endommagement du dispositif de taraudage.

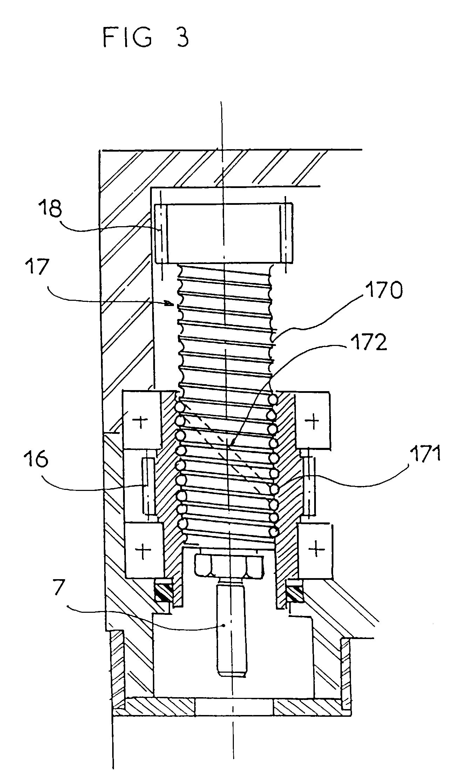

La figure 3 illustre une variante d'exécution de la vis-patronne (17) qui est du type à billes et qui à cet effet comprend un chemin hélicoïdal périphérique (170) de déplacement des billes (171) ainsi qu'un canal transversal (172) de communication permettant la circulation continue du train de billes (171).

On notera que la broche porte-taraud, la vis-patronne et l'écrou de l'ensemble porte-taraud sont disposés coaxialement, la broche porte-taraud étant immobilisée en rotation par rapport à la vis-patronne et ladite vis-patronne étant entraînée en rotation par le mécanisme d'entraînement à une vitesse angulaire différente de l'écrou, et que de préférence, la vis-patronne est entraînée en rotation à une vitesse angulaire supérieure à la vitesse angulaire de l'écrou.

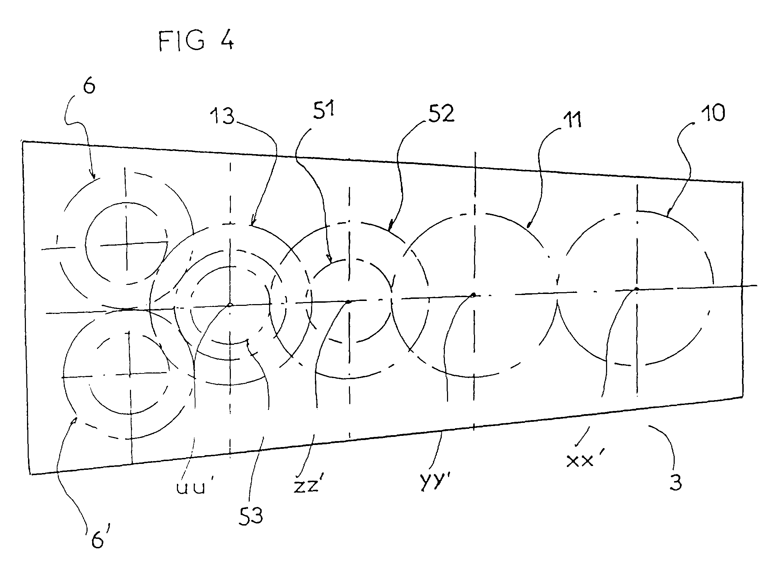

Il va de soi que l'on pourrait prévoir plusieurs ensembles porte-tarauds, comme cela est illustré schématiquement à la figure 4 où il a été représenté un dispositif de taraudage comprenant deux ensembles porte-tarauds (6, 6'). On pourrait tout aussi bien prévoir plus de deux porte-tarauds comme, par exemple, trois ou quatre, chacun des pignons de sortie étant alors reliés à une couronne dentée comprenant une denture intérieure.

Par ailleurs, il n'est, bien entendu, pas obligatoire que les pignons de sortie (12 et 13) soient disposés sur un même axe (14). Notons aussi que ces deux pignons pourraient très bien être de même diamètre, sans pour autant sortir du cadre de l'invention.

Bien entendu, l'invention n'est pas limitée aux modes de réalisation décrits et représentés à titre d'exemples.

## Revendications

1. Dispositif de taraudage sur presse du type comprenant un bâti (3), un mécanisme de transformation de mouvement (4), relié cinématiquement au moins à un ensemble porte-taraud (6) par un mécanisme de transmission (5) constitué par un train d'engrenage (11, 51, 52, 53, 12, 13), ledit mécanisme de transformation de mouvement (4) étant constitué par une vis (8), mobile en translation par rapport audit bâti (3), qui coopère avec un écrou (9) mobile en rotation et solidaire d'un pignon de commande (10), ce dernier entraînant ledit mécanisme de transmission (5), caractérisé en ce que ce dernier (5) comprend un pignon d'entrée (11) coopérant avec le pignon de commande (10) et deux pignons de sortie (12, 13) entraînant l'ensemble porte-taraud (6).

2. Dispositif de taraudage sur presse selon la revendication 1, caractérisé en ce que l'ensemble porte-taraud (6) est constitué par une vis-patronne (17) vissée dans un écrou rotatif (15) présentant une denture extérieure constituant un premier pignon d'entraînement (16), coopérant avec le premier pignon de sortie (13), ladite vis-patronne (17) comprenant, par ailleurs, à son extrémité supérieure, une denture constituant un deuxième pignon d'entraînement (18) en prise avec le deuxième pignon de sortie (12).

3. Dispositif de taraudage sur presse selon la revendication 2, caractérisé en ce que la vis-patronne (17) comprend un canal central (19) destiné à recevoir une broche porte-taraud (21) dans laquelle est monté un taraud (7), ladite broche porte-taraud (21) étant sollicitée vers le bas contre une butée (27) par un ressort (26) logé dans ledit canal central (19).

4. Dispositif de taraudage sur presse selon l'une quelconque des revendications précédentes, caractérisé en ce que les deux pignons de sortie (12, 13) du mécanisme de transmission sont montés sur un même axe (14) et sont solidaires, ces deux pignons de sortie présentant des diamètres différents.

5. Dispositif de taraudage sur presse selon la revendication 4, caractérisé en ce que le pignon de sortie (12) qui est en prise avec la denture extérieure (18) de la vis-patronne présente un diamètre supérieur au pignon de sortie (13) qui est en prise avec la denture extérieure (16) de l'écrou de l'ensemble porte-taraud.

6. Dispositif de taraudage sur presse selon l'une quelconque des revendications précédentes, caractérisé en ce qu'il comprend plusieurs ensembles porte-tarauds (6, 6').

## Patentansprüche

1. Gewindebohrwerkzeug, verwendet in einer Presse, bestehend aus einem Gehäuse (3), einem Mechanismus zur Bewegungsumsetzung (4), der kinematisch mindestens mit einer Gewindebohrer-Aufnahme (6) durch einen Übersetzungsmechanismus (5) verbunden ist, der von einem Getriebestrang (11, 51, 52, 53, 12, 13) gebildet wird, wobei dieser Mechanismus zur Bewegungsumsetzung (4) von einer Schraube (8) gebildet wird, die in Bezug auf das Gehäuse (3) translatorisch beweglich ist und mit einer Mutter (9) zusammenwirkt, die drehbeweglich und mit einem Steuerritzel (10) verbunden ist, wobei diese den Übersetzungsmechanismus (5) antreibt, dadurch gekennzeichnet, daß der Übersetzungsmechanismus (5) ein Eingangsritzel (11), das mit dem Steuerritzel (10) und zwei Ausgangsritzeln (12, 13) zusammenwirkt, die die Gewindebohrer-Aufnahme (6) antreiben.

2. Gewindebohrwerkzeug, verwendet in einer Presse, nach Anspruch 1, dadurch gekennzeichnet, daß die Gewindebohrer-Aufnahme (6) von einer Leitschraube (17) gebildet wird, die in eine drehbare Mutter (15) geschraubt ist, die eine Außenzahnung aufweist und so ein erstes Antriebsritzel (16) bildet, das mit dem ersten Ausgangsritzel (13) zusammenwirkt, wobei die Leitschraube (17) überdies an ihrem oberen Ende eine Zahnung aufweist, die ein zweites Antriebsritzel (18) bildet, das in das zweite Ausgangsritzel (12) eingreift.

3. Gewindebohrwerkzeug, verwendet in einer Presse, nach Anspruch 2, dadurch gekennzeichnet, daß die Leitschraube (17) einen Mittelkanal (19) umfaßt, der dazu bestimmt ist, eine Spindel mit Gewindebohrer-aufnahme (21) aufzunehmen, in die ein Gewindebohrer (7) montiert ist, wobei die Spindel (21) gegenüber einem Anschlag (27) mittels einer Feder (26), die in dem Mittelkanal (19) angeordnet ist, nach unten gedrückt wird.

4. Gewindebohrwerkzeug, verwendet in einer Presse, nach einem der vorhergehenden Ansprüche, dadurch gekennzeichnet, daß die beiden Ausgangsritzel (12, 13) des Übersetzungsmechanismus auf derselben Achse (14) befestigt und miteinander verbunden sind, wobei diese beiden Ausgangsritzel unterschiedliche Durchmesser aufweisen.

5. Gewindebohrwerkzeug, verwendet in einer Presse, nach Anspruch 4, dadurch gekennzeichnet, daß das Ausgangsritzel (12), das in die Außenzahnung (18) der Leitschraube eingreift, einen größeren Durchmesser als das Ausgangsritzel (13) aufweist, das in die Außenzahnung (16) der Mutter der Gewindetrageeinheit eingreift.

6. Gewindebohrwerkzeug, verwendet in einer Presse, nach einem der vorhergehenden Ansprüche, dadurch gekennzeichnet, daß sie mehrere Gewindebohrer-Aufnahme (6, 6') umfaßt.

## Claims

1. Tapping device on a press of the type comprising a frame (3), a movement conversion mechanism (4), kinematically connected at least to a tap-carrier assembly (6) by a transmission mechanism (5) consisting of a gear train (11, 51, 52, 53, 12, 13), the said movement conversion mechanism (4) consisting of a screw (8), able to move in translation with respect to the said frame (3), which cooperates with a rotatable nut (9) and fixed to a control pinion (10), the latter driving the said transmission mechanism (5), characterised in that the transmission mechanism (5) comprises an input pinion (11) cooperating with the control pinion (10) and two output pinions (12, 13) driving the tap-carrier assembly (6).

2. Tapping device on a press according to Claim 1, characterised in that the tap-carrier assembly (6) consists of a pattern screw (17) which is screwed into a rotary nut (15) having external teeth constituting a first drive pinion (16), cooperating with the first output pinion (13), the said pattern screw (17) also comprising, at its top end, teeth constituting a second drive pinion (18) in engagement with the second output pinion (12).

3. Tapping device on a press according to Claim 2, characterised in that the pattern screw (17) comprises a central channel (19) intended to receive a tap-carrier spindle (21) in which a tap (7) is mounted, the said tap-carrier spindle (21) being forced downwards against a stop (27) by a spring (26) housed in the said central channel (19).

4. Tapping device on a press according to any one of the preceding claims, characterised in that the two output pinions (12, 13) of the transmission mechanism are mounted on the same shaft (14) and are integral with each other, these two output pinions having different diameters.

5. Tapping device on a press according to Claim 4, characterised in that the output pinion (12) which is in engagement with the external teeth (18) on the pattern screw has a diameter greater than the output pinion (13) which is in engagement with the external teeth (16) of the nut of the tap-carrier assembly.

6. Tapping device on a press according to any one of the preceding claims, characterised in that it comprises several tap-carrier assemblies (6, 6').
